# EUROPÄISCHE PATENTSCHRIFT

(11) **EP 0 958 060 B1**
(45) Veröffentlichungstag und Bekanntmachung des Hinweises auf die Patenterteilung: **11.09.2002**
(21) Anmeldenummer: 98966604.5
(22) Anmeldetag: 01.12.1998
(51) Int. Cl.: B05B 7/14, B01D 53/94, F01N 3/20

(54) **VERFAHREN UND VORRICHTUNG ZUR ERZEUGUNG EINES FESTSTOFFAEROSOLS**
METHOD AND DEVICE FOR PRODUCING A SOLID AEROSOL
PROCEDE ET DISPOSITIF POUR LA PRODUCTION D'UN AEROSOL SOLIDE

(30) Priorität: 05.12.1997 DE 19754136; 05.12.1997 DE 19754135
(43) Veröffentlichungstag der Anmeldung: 24.11.1999
(73) Patentinhaber: Palas GmbH Partikel-und Lasermesstechnik, 76229 Karlsruhe (DE)
(72) Erfinder: MÖLTER, Leander, D-76744 Wörth (DE); MUNZINGER, Friedrich, D-75053 Gondelsheim (DE)
(74) Vertreter: Dipl.-Ing. Heiner Lichti Dipl.-Phys. Dr.rer.nat. Jost Lempert Dipl.-Ing. Hartmut Lasch
(86) Internationale Anmeldenummer: EP9807781
(87) Internationale Veröffentlichungsnummer: WO99029432

(56) Entgegenhaltungen:
- EP-A- 0 353 746
- EP-A- 0 615 777
- WO-A-94/14490
- WO-A-97/41910
- DE-A- 4 436 854
- DE-C- 4 429 707
- DE-U- 8 515 780
- US-A- 5 347 999

## Beschreibung

Die Erfindung betrifft ein Verfahren zur Erzeugung eines Feststoffaerosols, wobei ein Feststoff einem Feststoffvorrat entnommen und unter Bildung des Feststoffaerosols in einen Trägergasstrom eingeleitet wird. Sie ist weiterhin auf eine Vorrichtung zur Erzeugung eines Feststoffaerosols, mit einem Feststoffvorrat und einer Dosiereinrichtung, mittels der Feststoffpartikel von dem Feststoffvorrat entnehmbar und einem Trägergasstrom zuführbar sind, gerichtet.

Künstliche Aerosole haben wegen ihrer einfachen Handhabung und Dosierung sowohl in der Industrie, z.B. für katalysierte Festkörperreaktionen, als auch im Haushalt, z.B. in Form von Sprays für die Körperpflege, Fußboden-, Glas- und Möbelpflege, für die Schädlingsbekämpfung, als Anstrichmittel etc., eine große Bedeutung erlangt. Die Wirksamkeit ist hierbei neben der stofflichen Zusammensetzung insbesondere von der Teilchengrößenverteilung abhängig.

Aus der DE 85 15 780 U1 ist es bekannt, Feststoffpartikel von einem Feststoffvorrat mittels einer rotierenden Bürste schichtweise abzunehmen und in genau dosierter Menge einem Trägergasstrom zuzuführen, in dem die Feststoffpartikel in möglichst feiner Form zur Bildung eines Feststoffaerosols verteilt werden. Als Feststoffvorrat wird dabei ein loses Feststoffpulver verwendet, das in eine Kolbenkammer eines Vorschubkolbens eingefüllt wird, mit dem es der Bürste kontinuierlich zugeführt wird. Das Feststoffpulver liegt in der Kolbenkammer somit als loses Haufwerk vor. Wenn der Vorrat an Feststoffpulver in der Kolbenkammer verbraucht ist, muß Feststoffpulver nachgefüllt werden. Dies ist jedoch relativ aufwendig und läßt sich nur sehr schwierig automatisieren, wobei darüber hinaus die Gefahr besteht, daß nachzufüllendes Feststoffpulver aus der Kolbenkammer austritt und die Dosiervorrichtung verschmutzt.

Der Erfindung liegt die Aufgabe zugrunde, ein Verfahren und eine Vorrichtung der eingangs genannten Art zu schaffen, bei der der Feststoff auf einfache und automatisierbare Weise nachfüllbar ist und ein Nachfüllen des Feststoffvorrats nur in relativ großen Intervallen notwendig ist.

Der verfahrenstechnische Teil dieser Aufgabe wird erfindungsgemäß mit einem Verfahren gemäß den Merkmalen des Anspruchs 1 gelöst. Dabei kann die Dispergierung kontinuierlich oder aber auch in schnellem zeitlichen Wechsel (dynamisch) erfolgen. Dies ist insbesondere dann wichtig, wenn das Feststoffaerosol bzw. die im Trägergasstrom dispergierten Feststoffpartikel als Reaktand oder Katalysator für eine chemische Reaktion verwendet werden, so daß mittels der Dosiereinrichtung zeitlich veränderliche stöchiometrische Mengen des Feststoffs zur Verfügung gestellt werden können. Dies kann beispielsweise über eine dynamische Steuerung des Vorschubs des Feststoffblocks erreicht werden.

Der monolithische Feststoffblock besitzt eine hohe Eigenstabilität und läßt sich somit als einzelnes Teil leicht handhaben. Er ist formstabil und kann Druck- sowie Zugkräfte aufnehmen, so daß er von einer automatischen Nachfülleinrichtung in die Kolbenkammer eingeschoben werden kann.

Aufgrund der leichten Handhabbarkeit des monolithischen Feststoffblocks ist es sogar möglich, einen noch nicht verbrauchten Feststoffblock rückstandsfrei aus der Kolbenkammer herauszunehmen und gegen einen monolithischen Feststoffblock aus gegebenenfalls einem anderen Material auszutauschen.

Darüber hinaus hat sich bei Experimenten mit Harnstoff überraschenderweise gezeigt, daß durch das Abtragen von Partikeln von einem erfindungsgemäßen monolithischen Feststoffkörper gegenüber lediglich gepreßtem handelsüblichem Staub wesentlich feinere Partikel mit einer schmaleren Partikelgrößenverteilung erzeugt werden. Auch andere gepreßte Feststoffe, wie z.B. Kreide, lassen sich hervorragend zu einem Testaerosol dispergieren.

Vorzugsweise wird der Feststoffblock in einer Zuführeinrichtung angeordnet, mittels der er dem Abtragelement der Dosiereinrichtung kontinuierlich zugeführt wird, wobei es sich bei der Zuführeinrichtung um einen Vorschubkolben oder eine sonstige Transporteinrichtung handeln kann. Der Antrieb der Zuführeinrichtung, der vorzugsweise von einem Motor gebildet ist, ist zur Erzielung einer instationären bzw. diskontinuierlichen Dosierung regelbar, so daß sowohl eine zeitlich konstante als auch eine zeitlich variable Zuführung des Feststoffblocks möglich ist.

Erfindungsgemäß ist vorgesehen, daß der Feststoffblock aus einem mehrere Feststoffblöcke aufnehmenden Magazin an die Zuführeinrichtung übergeben wird. Wenn der in der Zuführeinrichtung befindliche Feststoffblock aufgebraucht ist, kann aus dem vorgeschalteten Magazin, bei dem es sich entweder um ein drehbares Revolvermagazin mit mehreren, auf einem Kreis angeordneten Aufnahmen für jeweils einen Feststoffblock oder auch um eine sogenannte Batterie handeln kann, bei der mehrere Aufnahmen für jeweils einen Feststoffblock in Reihe hintereinander angeordnet sind, ein neuer Feststoffblock an die Zuführeinrichtung übergeben und diese somit nachgeladen werden. Ein entsprechender Ablauf ergibt sich, falls der in der Zuführeinrichtung befindliche Feststoffblock ausgetauscht werden soll.

Der monolithische Feststoffblock, der vorzugsweise die Gestalt einer Stange besitzt, kann aus einem in sich stabilen, größeren Feststoffgebilde mechanisch herausgearbeitet werden, wie es beispielsweise bei einer Stange aus Steinsalz, einem Holzstab oder einem Kunststoffblock der Fall ist. Der monolithische Feststoffblock kann auch in Form von Scheiben, deren Höhe kleiner als ihr Durchmesser ist, ausgeführt sein. Solche Feststoffscheiben, vergleichbar den Ronden zur Herstellung von Münzen, bilden dann aufeinandergestapelt die Füllung der Kolbenkammer. Die scheibenförmigen Feststoffblöcke lassen sich ihrerseits in einfacher Art in einem Magazin bevorraten und auch in einfacher Weise aus dem Magazin der Kolbenkammer zuführen, beispielsweise über einen rotierenden Kegel, der in einer feststehenden Schüssel angeordnet ist, vergleichbar der Zuführung von Ronden in eine Münzpresse. Alternativ ist es jedoch auch möglich, den Feststoff, der ursprünglich als feines Pulver vorliegt, zu dem monolithischen Feststoffblock umzuformen. Dies kann einerseits dadurch geschehen, daß das Pulver geschmolzen oder teilgeschmolzen wird und anschließend wieder erstarrt, falls der Feststoff ein Schmelzen ohne vorherige Zersetzung zuläßt. Alternativ ist es auch möglich, die Feststoff-Pulverpartikel beispielsweise in einer hydraulischen Presse unter hohem Druck zu verdichten, wobei ein Feststoff, wie beispielsweise Harnstoff, unter einem Druck von mindestens 2000 atm = 200 kPa zu einem stabilen Feststoffblock kalt verdichtet wird. Wie bereits erwähnt, hat sich bei Versuchen gezeigt, daß die Dispergierung der vom Feststoffblock abgenommenen Feststoffpartikel bessere Ergebnisse, nämlich feinere Partikel, als bei der Verwendung eines herkömmlichen Pulverhaufwerkes zeigt. Dabei ist es weitestgehend unerheblich, wie die einzelnen Feststoffpartikel beschaffen sind. Diese können einerseits in ihrer bei der Herstellung angefallenen Form verwendet werden, alternativ kann auch ein Beschichtungsprozeß durchgeführt werden, bei dem die Partikel durch Aufdampfen, Aufsprühen, Sputtern, elektrische Entladungsprozesse, oder durch chemische Gasphasenabscheidung (CVD = chemical vapour deposition) mit einer dünnen Schicht (coating) überzogen werden, um dann beim nachfolgenden Verdichtungsprozeß oder einem Teilschmelzen nur soweit miteinander in Haftkontakt zu treten, daß die Partikel beim Vorgang des Dosierens leicht voneinander trennbar sind.

Das erfindungsgemäße Verfahren ist insbesondere zur selektiven katalytischen Reduktion (SCR) von in einem Gas, insbesondere im Abgas von Verbrennungsmaschinen enthaltenen Stickstoff oxiden (NOₓ) geeignet, indem von einem monolithischen, zur chemischen Abspaltung von Ammoniak befähigten Feststoffblock, insbesondere Harnstoffblock, Feststoffpartikel abgetragen und zu einem Feststoffaerosol dispergiert werden und das so gebildete Feststoffaerosol in einen Trägergasstrom eingeleitet und durch diesen einem Reduktions-Katalysator (SCR-Katalysator) direkt oder über einen vorgeschalteten Hydrolyse-Katalysator zugeführt wird, in welchem der Harnstoff zu Ammoniak (NH₃) und Kohlendioxid (CO₂) thermo-hydrolysiert wird.

Ein großer Teil der in den westlichen Industrieländern anfallenden Stickstoffoxid-Emissionen ist auf die Abgase von Verbrennungsmotoren zurückzuführen, wobei es speziell für Diesel- und Magermotoren von zunehmender Bedeutung ist, die Stickstoffoxid-Emissionen zu vermindern. Hierbei gilt es insbesondere, die im Abgas vorhandenen Stickstoffoxide (im wesentlichen Stickstoffmonoxid NO sowie etwas NO₂, insgesamt als NOₓ bezeichnet) nach der Methode der selektiven katalytischen Reduktion (SCR) in die lufteigenen Produkte Stickstoff N₂ und Wasserdampf H₂O umzuwandeln. Hierzu wird Ammoniakgas NH₃ in einer zum tatsächlich umgesetzten NO etwa stöchiometrischen Menge benötigt. Da das Mitführen von gasförmigem oder verflüssigtem Ammoniak in einem Kraftfahrzeug sehr problematisch ist, wird dieser in der Regel durch chemische Abspaltung aus Harnstoff NH₂-CO-NH₂ gewonnen. Dem Abgasstrom ist somit vor Erreichen des fahrzeugeigenen Katalysatorsystems Harnstoff zuzuführen.

Für den genannten Zweck kommen außer Harnstoff auch weitere Substanzen in Frage, die sich bei Erwärmung auf maximal 200 bis 250°C vollständig in Gase zersetzen, wobei als Gase nur Kohlendioxid CO₂, Wasserdampf H₂O und der zur Abgasreinigung benötigte Ammoniak akzeptabel sind. Als Ammoniak abspaltende Substanz können insbesondere Verwendung finden:
a.) Harnstoff NH₂-CO-NH₂,
b.) Ammoniumcarbamat NH₄-O-CO-NH₂,
c.) Ammoniumhydrogencarbonat NH₄HCO₃,
d.) Ammoniumcarbonat (NH₄)₂CO₃ und
e.) Ammoniumsalze von Carbonsäuren mit einer oder mehreren Carboxyl-Gruppen.

Da Harnstoff, der unzersetzt bei ca. 130°C schmilzt und sich bei ca. 200°C über eine Thermolyse/Hydrolyse zu Ammoniak und Wasserdampf umsetzt, für den genannten Zweck am geeignetsten ist, wird im folgenden von Harnstoff als Ammoniak abspaltender Substanz ausgegangen. Jedoch sind auch die anderen oben genannten Substanzen oder Mischungen davon einsetzbar, so daß diese erfindungsgemäß ausdrücklich mit umfaßt sein sollen.

Aus der DE 40 38 054 A1 ist es bekannt, eine wässrige Harnstofflösung in einem Behälter im Kraftfahrzeug mitzuführen und auf einen Hydrolyse-Katalysator aufzusprühen, wodurch eine Harnstoffzersetzung in Ammoniak und Kohlensäure erreicht wird. Dem Hydrolyse-Katalysator ist der eigentliche SCR-Katalysator nachgeschaltet, dem ein Oxidations-Katalysator folgt, in dem überschüssiger Ammoniak möglichst vollständig zu Stickstoff und Wasser oxidiert. Es hat sich jedoch gezeigt, daß mit der Verwendung einer wäßrigen Harnstofflösung in der Praxis erhebliche Probleme beim Winterbetrieb von Fahrzeugen aufgrund des relativ hohen Gefrierpunktes der Harnstofflösung sowie hinsichtlich des relativ hohen, im Fahrzueg mitzuführenden Gewichtes verbunden sind. Darüber hinaus ändert sich mit der Temperatur die Löslichkeit des Harnstoffs im Wasser. Daneben entzieht die eingedüste wäßrige Harnstoff-Lösung bei der Verdampfung ihres Wasseranteils dem Abgas und damit dem ohnehin meist zu kalten Katalysator ungünstigerweise Wärme. Zudem neigt das Eindüssystem zum Ansetzen von Verkrustungen aus festem Harnstoff, wenn die Zufuhr der Harnstoff-Lösung häufiger unterbrochen wird.

In der EP 0 615 777 A1 ist deshalb vorgeschlagen worden, den Harnstoff in fester Form im Fahrzeug mitzuführen und als Harnstoffstaubaerosol in das Abgas einzudosieren. Zu diesem Zweck wird der Harnstoff in einem Vorratsbehälter in Form von Prills oder Mikroprills mitgeführt und mit Hilfe eines präzisen Dosiergerätes einem Trägergasstrom zugeführt. Auf diese Weise sind zwar die o.g. Nachteile einer wäßrigen Harnstofflösung vermieden, jedoch ist es für eine exakte Dosierung und Beschickung der Harnstoffprills notwendig, das Material fließfähig zu halten. Dies ist insbesondere schwierig, da Harnstoff hygroskopisch ist und unter Belastungen zum Fließen neigt, wodurch die Gefahr des Zusammenbackens der Prills besteht. Um diese Probleme zu mindern, ist gemäß der EP 0 615 777 A1 vorgesehen, daß die Prills unter Ausschluß von Luftfeuchtigkeit luftdicht in Plastikbehältern verpackt und die Plastikbehälter nach Einbringen in den Vorratsbehälter zur Entnahme der Prills örtlich durchstochen werden. Dieses Vorgehen ist einerseits sehr aufwendig und andererseits ist die Betriebsdauer eines entsprechend ausgerüsteten Fahrzeugs von der Menge der in einem Plastikbehälter befindlichen Prills abhängig. Diese darf jedoch nicht zu groß sein, da ansonsten im Laufe der Zeit Feuchtigkeit an der durchstoßenen Stelle in den Plastikbehälter eindringen kann, womit die genannten Probleme verbunden sind. Die Feuchtigkeit kann einerseits durch den Wassergehalt der Außenluft oder durch Spritzwasser, andererseits durch Teilkondensation des hohen Anteils von Wasserdampf im Verbrennungsabgas auftreten. Es ist somit notwendig, den Harnstoffvorrat durch Einsetzen eines neuen Plastikbehälters häufig manuell aufzufüllen, was unbequem und wenig bedienungsfreundlich ist.

Demgegenüber zeichnet sich der erfindungsgemäße monolithische formstabile Harnstoffblock aus den bereits genannten Gründen durch eine einfache Handhabbarkeit aus und kann z.B. in größerer Anzahl im Fahrzeug mitgeführt und bei Bedarf von einer automatischen Nachfülleinrichtung in die Vorratskammer eingebracht werden. Auf diese Weise kann eine Abgasreinigung bei einem Kraftfahrzeug über eine lange Betriebsdauer erreicht werden, ohne daß der Benutzer den Harnstoffvorrat auffüllen muß. Das Nachfüllintervall kann dabei zweckmäßigerweise mit dem Intervall eines Ölwechsels beim Fahrzeug zusammenfallen. Insbesondere können mittels der Dosiereinrichtung sowohl konstante als auch zeitlich veränderliche Mengen an Harnstoffpartikel zur Verfügung gestellt werden, so daß entsprechend den verschiedenen Lastzuständen der Verbrennungsmaschine bzw. des Verbrennungsmotors, bei denen unterschiedliche Mengen an Stickstoff oxiden anfallen, stöchiometrisch Ammoniak angeboten wird.

Der Harnstoff kann z.B. auch mit einer geringen Menge eines anderen Stoffes, beispielsweise Kunststoff, der bei dem genannten Verfahren unschädlich ist, zu einem elastischen Material verarbeitet werden, das dann in Form von aufwickelbaren Strängen leicht bevorratet und dosiert werden kann.

Für den Fall, daß die erzeugten Harnstoffpartikel noch nicht die gewünschte Größe aufweisen, kann der Dosiereinrichtung zusätzlich eine Zerkleinerungseinrichtung nachgeschaltet werden.

Die Harnstoffpartikel gewünschter Partikelgröße werden mittels des Trägergasstroms dem Katalysator-System beispielsweise mit dem aus der EP 0 615 777 A1 bekannten Aufbau zugeführt. Dabei kann gegebenenfalls auch auf den Hydrolyse-Katalysator verzichtet werden, wobei dann der der Abgas-Strömung zugewandte Teil des SCR-Katalysators, d.h. sein vorderer Teil, der Harnstoff-Zersetzung dient.

Der Trägergasstrom zum Dispergieren der generierten Pulverpartikel kann von dem zu reinigenden Abgas abgezweigt werden. Dabei kann jedoch das Problem auftreten, daß das beim Verbrennen des Kraftstoffs entstehende Wasser unmittelbar nach Starten des Motors noch in flüssiger Form vorliegt und somit die Dosiereinrichtung näßt. In diesem Fall ist es vorteilhaft, eine zumindest anfängliche Trockung des Abgasstroms, beispielsweise mittels eines wasseraufnehmenden Stoffes, wie Silikagel, vorzusehen, der bei nach ausreichender Betriebsdauer entstehenden höheren Temperaturen wieder getrocknet wird. Die Praxis zeigt jedoch, daß das Katalysator-System in der Regel erst ab ca. 130°C funktioniert, so daß auch erst ab dieser Temperatur Harnstoff dosiert werden muß, so daß das Feuchtigkeitsproblem nicht auftritt. Desweiteren kann auch eine Klappe oder eine Verschlußeinrichtung zum Schutz des Dosiermundes vorgesehen sein.

Als Trägergasstrom zum Dispergieren der Partikel kann alternativ auch Luft verwendet werden, die über einen Verdichter zugeführt wird.

Die Erfindung betrifft schließlich eine insbesondere zur Durchführung des erfindungsgemäßen Verfahrens geeignete Vorrichtung welche die Merkmale des Anspruchs 9 aufweist.

Erfindungsgemäß ist der Feststoffblock in einer Zuführeinrichtung angeordnet, mittels der er der Dosiereinrichtung zuführbar ist, wobei es sich bei der Zuführeinrichtung um einen Vorschubkolben oder eine sonstige Transporteinrichtung handeln kann. Hierbei ist der Zuführeinrichtung ein Magazin zur Aufnahme mehrerer Feststoffblöcke, z.B ein drehbares Revolvermagazin oder eine Batterie, vorgeschaltet.

Wie bereits erwähnt, kann der Feststoffblock beispielsweise aus geschmolzenen oder teilweise geschmolzenen und wieder erstarrten oder alternativ aus unter hohem Druck verdichteten Feststoffpartikeln gebildet sein.

Als Dosiereinrichtung sind verschiedene Ausgestaltungen möglich. Grundsätzlich kann eine rotierende Bürste, insbesondere eine Edelstahlbürste, verwendet werden, wobei jedoch bei längerem Gebrauch die Gefahr besteht, daß die Abtrag-Elemente in Form der Borsten abnutzen. Überraschenderweise hat sich gezeigt, daß harte Borsten den monolithischen Feststoffblock unter Bildung einer gleichmäßigen Oberfläche abtragen und daß bei Verwendung eines Harnstoffblocks insbesondere durch den Abtrag mit harten Borsten Partikel mit Partikeldurchmessern < 20 µm und mit einer mittleren Volumenverteilung von etwa 15 µm erzielbar sind. Im Vergleich konnten bei Verwendung von handelsüblichem gepreßtem Harnstoffstaub nur Partikel mit einem Partikeldurchmesser von bis zu 125 µm und mit einer mittleren Volumenverteilung von 70-80 µm erzeugt werden. Um für eine ausreichende Steifigkeit der Borsten zu sorgen, sollte der Durchmesser beispielsweise bei einer Borstenlänge von etwa 7 mm mindestens 0,15 mm betragen, wobei mit wachsender Borstenlänge ein größerer Borstendurchmesser zu wählen ist.

In alternativer Ausgestaltung kann die Dosiereinrichtung auch von einem rotierenden Fräskopf, insbesondere einem Schruppfräser oder einem Stirnfräser, gebildet sein. In einer weiteren Ausgestaltung kann eine Schleifscheibe oder -walze mit harten, kantigen Schleifkörnern, üblicherweise aus Siliziumcarbid (SiC) oder Wolframcarbid (WC), verwendet werden.

In einer weiteren Ausgestaltung ist eine Walze denkbar, die über den Umfang verteilt mehrere sich axial erstreckende Schneidmesser trägt. Die Schneidmesser sind an ihrer Schneidkante mit Einschnitten versehen, damit nicht ein zusammenhängender Span, sondern mehrere kleine Späne von dem Feststoffblock abgenommen werden.

Die Dosiereinrichtung besitzt insbesondere einen regelbaren Antriebsmotor, so daß neben einer stationären bzw. kontinuierlichen Dosierung auch eine instationäre bzw. diskontinuierliche oder zeitlich variable Dosierung möglich ist, wodurch schnellen dynamischen Vorgängen gefolgt werden kann.

Die Relativbewegung zwischen der Dosiereinrichtung und dem Feststoffblock kann einerseits dadurch erreicht werden, daß die Dosiereinrichtung in Bewegung versetzbar ist, alternativ ist es jedoch auch möglich, daß die Dosiereinrichtung ein feststehendes Werkzeug umfaßt und der Feststoffblack relativ zum Werkzeug bewegbar ist. Dies ist dadurch möglich, daß der Feststoffblock eine hohe Eigenstabilität besitzt und Kräfte aufnehmen kann, was bei einem Pulverhaufwerk nicht der Fall ist.

Für den Fall, daß die mittels der Abtrag-Elemente der Dosiereinrichtung erzeugten Feststoffpartikel noch nicht die gewünschte Größe aufweisen, kann dieser eine Zerkleinerungseinrichtung nachgeschaltet sein. Dabei kann die Zerkleinerungseinrichtung mehrere Prallfächen umfassen, auf die die Feststoffpartikel auftreffen, wobei sie durch die Aufprallenergie zerkleinert werden. Zusätzlich oder alternativ kann die Zerkleinerungseinrichtung auch eine Mahleinrichtung umfassen, in der die Feststoffpartikel durch Scherkräfte auf die gewünschte Größe zermahlen werden.

Enthält der Trägergasstrom zum Dispergieren der Feststoffpartikel Wasser und/oder ist der Feststoff hygroskopisch, so ist in bevorzugter Ausführung eine Trocknungseinrichtung für den Trägergasstrom vorgesehen, wobei die Trocknung beispielsweise mittels eines wasseraufnehmenden Stoffes, wie Silikagel, erfolgen kann.

Weitere Einzelheiten und Merkmale der Erfindung ergeben sich aus der folgenden Beschreibung eines Ausführungsbeispiels unter Bezugnahme auf die Zeichnungen. Es zeigen:
- Fig. 1: einen schematischen Schnitt durch eine erfindungsgemäße Vorrichtung,
- Fig. 2: eine schematische Aufsicht auf ein Revolvermagazin und
- Fig. 3: eine schematische Aufsicht auf ein Batteriemagazin.

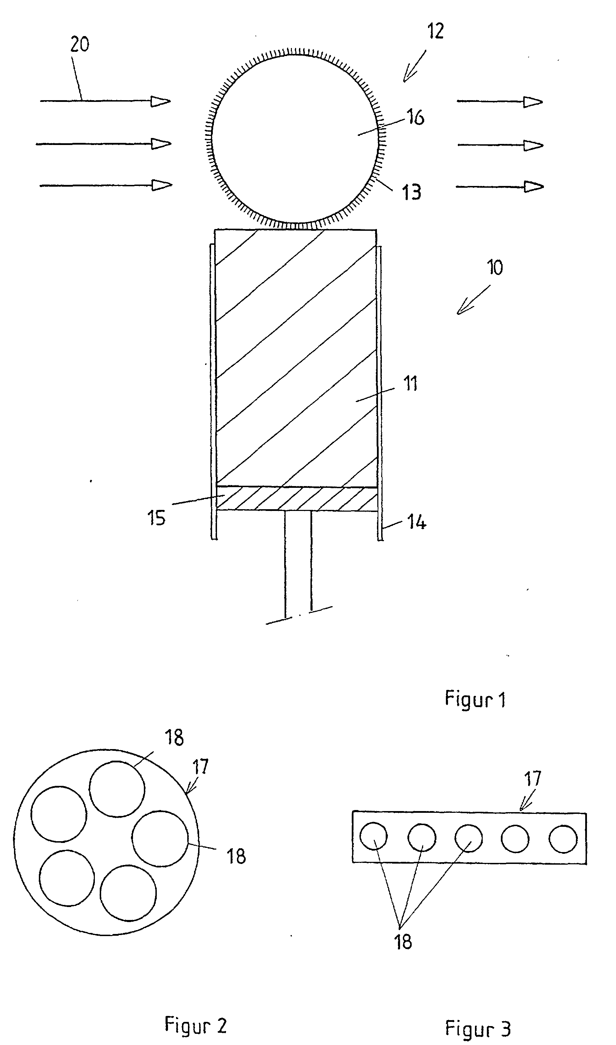

Wie aus Fig. 1 ersichtlich, weist die erfindungsgemäße Vorrichtung 10 zur Erzeugung eines Feststoffaerosols einen Feststoffbehälter 14 in Form eines Rohrgehäuses auf, in dem ein Vorschubkolben 15 axial verschieblich angeordnet ist. Oberhalb des Vorschubkolbens 15 ist ein monolithischer Feststoffblock 11 angeordnet, der durch Verfahren des Vorschubkolbens 15 kontinuierlich einer Dosiereinrichtung 12 zugeführt werden kann, die oberhalb des Feststoffbehälters 14 angeordnet ist. Die Dosiereinrichtung 12 umfaßt einen drehbar gelagerten Bürstenkörper 16, der an seiner Außenumfangsfläche mit Abtragelementen oder -werkzeugen 13 in Form harter Metallborsten besetzt ist. Bei Drehung des Bürstenkörpers 16 kratzen die Borsten 13 Feststoffpartikel von dem Feststoffblock 11 herunter, die in nicht näher dargestellter, an sich bekannter Weise einem Trägergasstrom 20 zugeführt werden.

Der aus Feststoffbehälter 14 und Vorschubkolben 15 bestehenden Zuführeinrichtung ist ein in Fig. 1 nicht näher dargestelltes Magazin 17 zur Aufnahme mehrerer Feststoffblöcke 11 vorgeschaltet. Gemäß Fig. 2 ist das Magazin 17 als drehbares Revolvermagazin ausgebildet, das fünf Aufnahmen 18 für jeweils einen Feststoffblock besitzt, die auf einem Kreis angeordnet sind. Alternativ kann das Magazin 17 auch als verstellbares Batteriemagazin ausgebildet sein, wie es in Fig. 3 dargestellt ist. Dabei sind mehrere Aufnahmen 18 für jeweils einen Feststoffblock in Reihe hintereinander angeordnet

## Patentansprüche

1. Verfahren zur Erzeugung eines Feststoffaerosols, wobei ein Feststoff einem Feststoffvorrat entnommen und unter Bildung des Feststoffaerosols in einen Trägergastrom eingeleitet wird, **dadurch gekennzeichnet, daß** ein monolithischer Feststoffblock (11) aus einem mehrere Feststoffblöcke (11) aufnehmenden Magazin (17) an die Zuführeinrichtung (14,15) übergeben wird und von dem monolithischen Feststoffblock (11) mittels einer wenigstens ein Abtragwerkzeug (13) aufweisenden Dosiereinrichtung (12) feine Feststoffpartikel abgetragen und dispergiert werden.

2. Verfahrens nach Anspruch 1, **dadurch gekennzeichnet, daß** der Feststoffblock (11) in einer Zuführeinrichtung (14,15) angeordnet ist, mittels der er dem Abtragelement (13) der Dosiereinrichtung (12) kontinuierlich zugeführt wird.

3. Verfahren nach Anspruch 1 oder 2, **dadurch gekennzeichnet, daß** der Feststoffblock (11) durch Aufschmelzen oder Teilaufschmelzen und Wiedererstarren von Feststoffpartikeln gebildet wird.

4. Verfahren nach Anspruch 1 oder 2, **dadurch gekennzeichnet, daß** der Feststoffblock (11) durch Verdichten von Feststoffpartikeln unter hohem Druck gebildet wird.

5. Verfahren nach Anspruch 4, **dadurch gekennzeichnet, daß** der Druck zumindest 2000 atm (= 200 kPa) beträgt.

6. Verfahren nach einem der Ansprüche 1 bis 5 zur selektiven Reduktion (SCR) von in einem Gas, insbesondere im Abgas von Verbrennungsmaschinen, enthaltenen Stickoxiden (NOₓ), **dadurch gekennzeichnet, daß** von einem monolithischen, zur chemischen Abspaltung von Ammoniak befähigten Feststoffblock (11), insbesondere Harnstoffblock, Feststoffpartikel abgetragen und zu einem Feststoffaerosol dispergiert werden, daß das so gebildete Feststoffaerosol in einen Trägergasstrom (20) eingeleitet und durch diesen einem Reduktions-Katalysator (SCR-Katalysator) direkt oder über einen vorgeschalteten Zersetzungs-(Hydrolyse)-Katalysator zugeführt wird, in welchem der Harnstoff zu Ammoniak und Kohlendioxid thermo-hydrolysiert wird.

7. Verfahren nach Anspruch 6, **dadurch gekennzeichnet, daß** der Trägergasstrom (20) von dem zu reinigenden Abgas abgezweigt wird.

8. Verfahren nach Anspruch 6 **dadurch gekennzeichnet, daß** der Trägergasstrom (20) von Luft gebildet wird.

9. Vorrichtung zur Erzeugung eines Feststoffaerosols, mit einem Feststoffvorrat und einer Dosiereinrichtung, mittels der Feststoffpartikel von dem Feststoffvorrat entnehmbar und einem Trägergasstrom zuführbar sind, insbesondere zur Durchführung des Verfahrens nach einem der Ansprüche 1 bis 8, **dadurch gekennzeichnet, daß** der Feststoffvorrat von monolithischen Feststoffblöcken (11) gebildet ist daß ein Magazin (17) zur Aufnahme mehrerer monolithischer Feststoffblöcke (11) einer Zuführeinrichtung (14,15) zur Zuführung der Feststoffblöcke (11) zur Dosiereinrichtung (12) vorgeschaltet ist und daß die Dosiereinrichtung (12) zumindest ein mit dem Feststoffblock (11) oberflächlich in Eingriff tretendes Abtragelement (13) aufweist.

10. Vorrichtung nach Anspruch 9, **dadurch gekennzeichnet, daß** der Feststoffblock (11) aus geschmolzenen oder teilweise geschmolzenen und wieder erstarrten Feststoffpartikeln gebildet ist.

11. Vorrichtung nach Anspruch 9, **dadurch gekennzeichnet, daß** der Feststoffblock (11) aus unter hohem Druck verdichteten Feststoffpartikeln gebildet ist.

12. Vorrichtung nach einem der Ansprüche 9 bis 11, **dadurch gekennzeichnet, daß** die Dosiereinrichtung (12) eine rotierende Bürste (13,16) ist.

13. Vorrichtung nach einem der Ansprüche 9 bis 11, **dadurch gekennzeichnet, daß** die Dosiereinrichtung (12) ein rotierender Fräskopf ist.

14. Vorrichtung nach einem der Ansprüche 9 bis 11, **dadurch gekennzeichnet, daß** die Dosiereinrichtung (12) ein feststehendes Werkzeug umfaßt und daß der Feststoffblock (11) relativ zum Werkzeug bewegbar ist.

15. Vorrichtung nach einem der Ansprüche 9 bis 14, **dadurch gekennzeichnet, daß** dem Abtragelement (16) der Dosiereinrichtung (12) eine Zerkleinerungseinrichtung nachgeschaltet ist.

16. Vorrichtung nach Anspruch 15, **dadurch gekennzeichnet, daß** die Zerkleinerungseinrichtung mehrere Prallflächen für die Feststoffpartikel und/oder eine Mahlvorrichtung umfaßt.

17. Vorrichtung nach Anspruch 16, **dadurch gekennzeichnet, daß** eine Trocknungseinrichtung für den Trägergasstrom vorgesehen ist.

## Claims

1. Method for producing a solid aerosol, in which a solid is taken from a solid reservoir and introduced, accompanied by the formation of a solid aerosol, into a carrier gas stream, **characterized in that** a monolithic solid block (11) is transferred from a magazine (17) having several solid blocks (11) to the supply device (14, 15) and from the monolithic solid block (11) using a dosing device (12) having at least one removal tool (13) fine solid particles are removed and dispersed.

2. Method according to claim 1, **characterized in that** the solid block (11) is located in a supply device (14, 15) by means of which it is continuously supplied to the removal tool (13) of the dosing device (12).

3. Method according to claim 1 or 2, **characterized in that** the solid block (11) is formed by the melting or partial melting and resolidification of solid particles.

4. Method according to claim 1 or 2, **characterized in that** the solid block (11) is formed by compacting under high pressure solid particles.

5. Method according to claim 4, **characterized in that** the pressure is at least 2000 atm (= 200 kPa).

6. Method according to one of the claims 1 to 5 for the selective reduction (SCR) of nitrogen oxides (NOₓ) contained in a gas, particularly in the exhaust gas of internal combustion engines, **characterized in that** from a monolithic solid block (11) able to chemically split off ammonia and in particular a urea block are removed solid particles and dispersed to a solid aerosol, that the thus formed solid aerosol is introduced into a carrier gas stream (20) and supplied by the latter either directly or via an upstream decomposition (hydrolysis) catalyst to a reduction catalyst (SCR catalyst), in which the urea is thermo-hydrolyzed to ammonia and carbon dioxide.

7. Method according to claim 6, **characterized in that** the carrier gas stream (20) is branched off from the exhaust gas to be cleaned.

8. Method according to claim 6, **characterized in that** the carrier gas stream (20) is formed by air.

9. Apparatus for producing a solid aerosol with a solid reservoir and a dosing device, by means of which the solid particles can be taken from the solid reservoir and supplied to a carrier gas stream, particularly for performing the method according to one of the claims 1 to 8, **characterized in that** the solid reservoir is formed by monolithic solid blocks (11), that a magazine (17) for receiving several monolithic solid blocks (11) is positioned upstream of a supply device (14, 15) for supplying solid blocks (11) to the dosing device (12) and that the dosing device (12) has at least one removing element (13) coming into surface contact with the solid block (11).

10. Apparatus according to claim 9, **characterized in that** the solid block (11) is formed from melted or partly melted and resolidified solid particles.

11. Apparatus according to claim 9, **characterized in that** the solid block (11) is formed from solid particles compacted under high pressure.

12. Apparatus according to one of the claims 9 to 11, **characterized in that** the dosing device (12) is a rotary brush (13, 16).

13. Apparatus according to one of the claims 9 to 11, **characterized in that** the dosing device (12) is a rotary cutter head.

14. Apparatus according to one of the claims 9 to 11, **characterized in that** the dosing device (12) incorporates a fixed tool and that the solid block (11) is movable relative to the tool.

15. Apparatus according to one of the claims 9 to 14, **characterized in that** the removing element (13) of the dosing device (12) is followed by a comminuting device.

16. Apparatus according to claim 15, **characterized in that** the comminuting device comprises several impact surfaces for the solid particles and/or a grinding device.

17. Apparatus according to claim 16, **characterized in that** a drying device is provided for the carrier gas stream.

## Revendications

1. Procédé de génération d'un aérosol de matière solide, selon lequel on prélève une matière solide dune réserve de matière solide et on l'introduit dans un flux de gaz de transport tout en formant l'aérosol solide, **caractérisé en ce que** l'on transfère un bloc de matière solide (11) monolithique d'un magasin (17) contenant plusieurs blocs de matière solide vers le dispositif d'amenée (14,15) et **en ce qu'**au moyen d'un dispositif de dosage (12) comprenant au moins un outil- abrasif (13) de fines particules de matière solide sont enlevées du bloc de matière solide (11) monolithique et dispersées.

2. Procédé selon la revendication 1, **caractérisé en ce que** le bloc de matière solide (11) est disposé dans un dispositif d'amenée (14,15) grâce auquel il est acheminé en continu vers l'élément abrasif (13) du dispositif de dosage (12).

3. Procédé selon la revendication 1 ou 2, **caractérisé en ce que** le bloc de matière solide (11) est constitué par la fusion totale ou partielle et le refigeage de particules de matière solide.

4. Procédé selon la revendication 1 ou 2, **caractérisé en ce que** le bloc de matière solide (11) est constitué par la compression de particules de matière solide sous l'effet dune forte pression.

5. Procédé selon la revendication 4, **caractérisé en ce que** la pression est d'au moins 2000 atm (= 200 kPa).

6. Procédé selon l'une quelconque des revendications 1 à 5 pour la réduction sélective (SCR) de protoxydes d'azote (NOₓ) contenus dans un gaz, en particulier dans le gaz d'échappement de machines à combustion interne, **caractérisé en ce que** l'on enlève des particules de matière solide d'un bloc de matière solide (11) monolithique capable d'éliminer chimiquement de l'ammoniaque, en particulier d'un bloc d'urée, et qu'on les disperse en un aérosol de matière solide, **en ce que** l'on introduit l'aérosol de matière solide ainsi formé dans un flux de gaz de transport (20) qui l'achemine vers un catalyseur de réduction (catalyseur SCR) directement ou par l'intermédiaire d'un catalyseur de décomposition (hydrolyse) monté en amont dans lequel on transforme l'urée en ammoniaque et en dioxyde de carbone par thermo-hydrolyse.

7. Procédé selon la revendication 6, **caractérisé en ce que** le flux de gaz de transport (20) est séparé du gaz d'échappement à purifier.

8. Procédé selon la revendication 6, **caractérisé en ce que** le flux de gaz de transport (20) est constitué d'air.

9. Dispositif pour la production d'un aérosol de matière solide, comprenant une réserve de matière solide et un dispositif de dosage, au moyen duquel des particules de matière solide peuvent être enlevés de la réserve de matière solide et acheminées vers un flux de gaz de transport, en particulier en appliquant le procédé selon l'une quelconque des revendications 1 à 8, **caractérisé en ce qu'**un magasin (17) recevant plusieurs blocs de matière solide (11) monolithiques est monté en amont d'un dispositif d'amenée (14,15) servant à acheminer les blocs de matière solide (11) vers le dispositif de dosage (12) et **en ce que** le dispositif de dosage (12) présente au moins un élément abrasif (13) entrant en contact superficiel avec le bloc de matière solide (11).

10. Dispositif selon la revendication 9, **caractérisé en ce que** le bloc de matière solide (11) est constitué de particules de matière solide totalement ou particulièrement fondues et à nouveau figées.

11. Dispositif selon la revendication 9, **caractérisé en ce que** le bloc de matière solide (11) est constitué de particules de matière solide comprimées sous l'effet dune haute pression.

12. Dispositif selon l'une quelconque des revendications 9 à 11, **caractérisé en ce que** le dispositif de dosage (12) consiste en une brosse rotative (13,16).

13. Dispositif selon l'une quelconque des revendications 9 à 11, **caractérisé en ce que** le dispositif de dosage (12) consiste en une tête de fraisage rotative.

14. Dispositif selon l'une quelconque des revendications 9 à 11, **caractérisé en ce que** le dispositif de dosage (12) comprend un outil fixe et **en ce que** le bloc de matière solide (11) est mobile par rapport à l'outil.

15. Dispositif selon l'une quelconque des revendications 9 à 14, **caractérisé en ce qu'**un dispositif de réduction est monté en aval de l'élément abrasif (16) du dispositif de dosage (12).

16. Dispositif selon la revendication 15, **caractérisé en ce que** le dispositif de réduction comporte plusieurs surfaces de rebondissement pour les particules de matière solide et/ou un dispositif de broyage.

17. Dispositif selon la revendication 16, **caractérisé en ce que** l'on prévoit un moyen de séchage pour le flux de gaz de transport.
